# EUROPEAN PATENT APPLICATION

(11) **EP 4 096 247 A1**
(43) Date of publication of application: **30.11.2022**
(21) Application number: 22153178.3
(22) Date of filing: 25.01.2022
(51) Int. Cl.: H04W 4/02, H04W 4/029, G06Q 10/08

(54) **CONTROLLING A TRACKER DEVICE DURING WATERBORNE TRANSPORT**

(30) Priority: 27.05.2021 SE 2150668
(71) Applicant: Sony Network Communications Europe B.V., 2132LS Hoofddorp (NL)
(72) Inventor: KVAPIL, Jan, Basingstoke, RG22 4SB (GB); TILLGREN, Magnus, Basingstoke, RG22 4SB (GB); FALK, Mattias, Basingstoke, RG22 4SB (GB); EKSTRÖM, Jörgen, Basingstoke, RG22 4SB (GB)
(74) Representative: Neij & Lindberg AB

(57) **Abstract**

A tracker device comprises a positioning system, a communication system, and a movement sensing system. The tracker device is configured to utilize the movement sensing system to reduce power consumption during waterborne transport. The tracker device intermittently operates (100) its positioning system to determine a geographic position of the tracker device, and intermittently operates (100) the communication system to transmit the geographic position to a remote computer. The tracker device further detects (201-203), based on at least one signal from the movement sensing system, that the tracker device is in transit on a waterborne vessel, and disables (204) the communication system when the tracker device is detected to be in transit on the waterborne vessel.

## Description

### Technical Field

The present disclosure relates to functions in tracker devices and, in particular, techniques for operating a tracker device during waterborne transport.

### Background

Tracker devices are used for tracking assets, vehicles, persons and animals during transportation. Tracker devices are also known as "trackers" or geotracking devices. For example, a tracker may be attached to otherwise associated with an item to be transported. During transportation, the tracker is operated to repeatedly determine its position by use of a GNSS receiver, for example a GPS receiver, and wirelessly transmit its position to a backend device, for example in the cloud.

If the tracker is transported on a waterborne vessel, for example on open sea, it is not uncommon that the tracker is unable to establish the wireless connection to the backend device, for example via a cellular network. The tracker nevertheless repeatedly probes for a network connection. Trackers are power-limited devices, and the probing may drain the power source. This risk is exacerbated by the fact that waterborne transportation is slow and may last several days if not weeks or even months.

Another challenge of tracker operation during waterborne transport is to detect arrival at a destination. Trackers are generic devices that may be applied to track any item on any transportation route. The trackers thereby may lack information about the means of transportation or the transportation route. Further, even if the tracker knew the location of the destination for the waterborne transportation, it might be risky for the tracker to rely on positions determined by its GNSS receiver for arrival detection since signal reception at the GNSS receiver may be disrupted by the environment of the tracker in the waterborne vessel, for example if the tracker is located in a shipping container or a cargo hold.

### Summary

It is an objective to at least partly overcome one or more limitations of the prior art.

It is also an objective to provide a technique to enable low power consumption of a tracker device during waterborne transport.

A further objective is to enable a tracker device to detect arrival at the destination of the waterborne transport.

One or more of these objectives, as well as further objectives that may appear from the description below, are at least partly achieved by a tracker device and a method performed by a tracker device according to the independent claims, embodiments thereof being defined by the dependent claims.

A first aspect of the present disclosure is a tracker device. The tracker device comprises a positioning system, a communication system, and a movement sensing system. The tracker device is configured to intermittently operate the positioning system to determine a geographic position of the tracker device, and intermittently operate the communication system to transmit the geographic position of the tracker device to a remote computer. The tracker is further configured to detect, based on at least one signal from the movement sensing system, that the tracker device is in transit on a waterborne vessel, and disable the communication system when the tracker device is detected to be in transit on the waterborne vessel.

A second aspect is a method performed by a tracker device comprising a positioning system, a communication system, and a movement sensing system. The method comprises intermittently operating the positioning system to determine a geographic position of the tracker device, and intermittently operating the communication system to transmit the geographic position of the tracker device to a remote computer. The method further comprises detecting, based on at least one signal from the movement sensing system, that the tracker device is in transit on a waterborne vessel, and disabling the communication system when the tracker device is detected to be in transit on the waterborne vessel.

A third aspect is a computer-readable medium comprising instructions which, when installed on a processing system, causes the processing system to perform the method of the second aspect.

Still other objectives and aspects, as well as features, embodiments and technical effects will appear from the following detailed description, the attached claims and the drawings.

### Brief Description of Drawings

FIG. 1A illustrates a transportation route of a tracker device and events associated with waterborne transport, and FIG. 1B is a timing diagram of the events in FIG. 1A and operations performed by the tracker device.
FIG. 2 is a flow chart of an example method performed by the tracker device.
FIG. 3A is a block diagram of an example tracker device, and FIG. 3B shows a tracker device in communication with a remote computer.
FIG. 4A is a flowchart of an example method of operating a tracker device in accordance with an embodiment, and FIG. 4B is a flow chart of an example procedure performed by the method in FIG. 4A in accordance with embodiments.
FIGS 5A-5C illustrate example parameters for detection of transport by a waterborne vessel.
FIGS 6A illustrates vector data determined by an accelerometer in a tracker device, and FIGS 6B-6C show vector data determined at a plurality of time points in a horizontal plane for a waterborne vessel before departure and after departure, respectively.
FIG. 7 is a flow chart of an example method performed during the transportation route in FIG. 1A.
FIG. 8 is a flow chart of an example procedure performed by the method in FIG. 7 in accordance with embodiments.

### Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements. Like numbers refer to like elements throughout.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments.

It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure. As used herein, the terms "multiple", "plural" and "plurality" are intended to imply provision of two or more elements, whereas the term "set" is intended to imply a provision of one or more elements. The term "and/or" includes any and all combinations of one or more of the associated listed elements.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Embodiments relate to techniques of operating a tracker device ("tracker") which may be associated with any type of item during transport from a departure point to a final destination. Some embodiments relate to operation of the tracker when located on a waterborne vessel during transport. The techniques described herein enable power savings in the tracker during waterborne transport by utilizing a movement sensing system in the tracker for detecting departure of the waterborne vessel from a departure port and disabling one or more power-consuming processes in the tracker when departure is detected. The techniques described herein also allow the tracker to detect arrival at a destination port for the waterborne transport. Techniques are also described to allow the tracker to detect and act on other events associated with waterborne transport both before departure and after arrival.

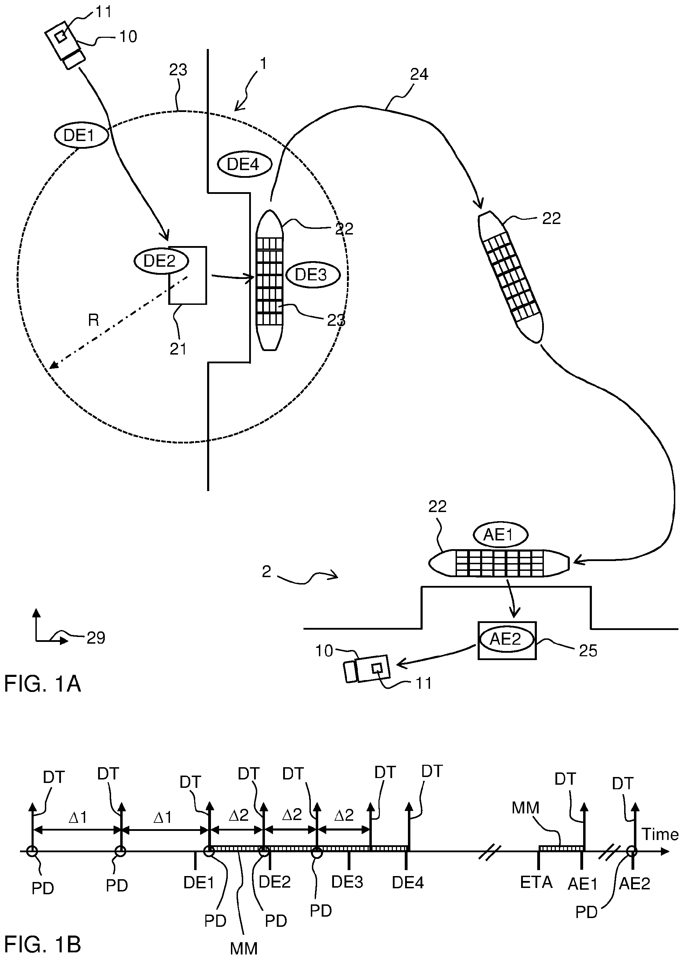

Embodiments will be described with reference to an example transportation route of a tracker device ("tracker") as depicted in FIG. 1A. In the illustrated example, goods are transported by road to a first port 1, at which the goods are transferred and transported to a second port 2 on water. At the port 2, the goods are again transferred and transported by road to a final destination (not shown). The goods arrive at port 1 on a truck or lorry 10. A tracker 11 is associated with an item, for example by being attached thereto. The goods are unloaded from the truck 10 at a storage site 21 and, subsequently, transferred onto a waterborne vessel 22. For example, the goods may be packed into a container 23, which is lifted onto the vessel 22. Alternatively, the goods may be loaded into a cargo hold of the vessel 22. The vessel 22 may be any type of ship used for waterborne transport, including but not limited to cargo ships, freight liners, container ships, reefer ships, passenger ships, tramps, tankers, bulk carriers, etc. The waterborne transport may include ocean transport or inland transport, or any combination thereof. The vessel 22 is then operated to depart from port 1 on a waterborne route 24 to port 2. At port 2, the goods are unloaded from the vessel 22 onto a storage site 25. The goods may be stored at the site 25 inside the containers 23 or be unpacked from the containers and stored otherwise. The goods and the tracker 11 are then loaded onto a truck 10 for road transport to a final destination.

The tracker 11 is configured to intermittently determine its geographic position during transport and wirelessly transmit corresponding position data to a remote computer, for example a server or cloud computing system. The geographic position is determined in a global coordinate system 29 to allow the remote computer to keep track of the position of the item associated with the tracker 11.

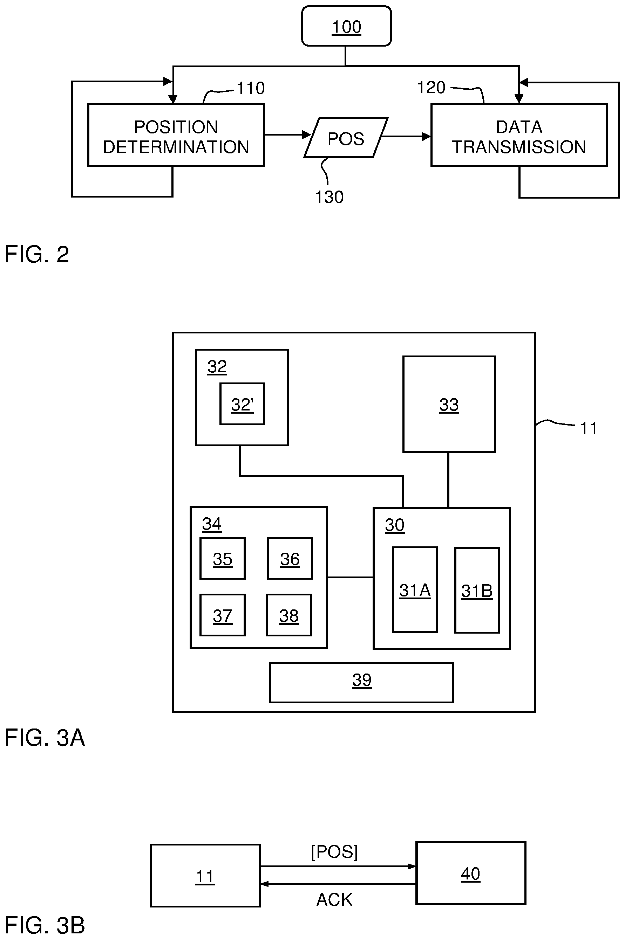

FIG. 2 is a flow chart of an example method 100 that is performed by the tracker 11 during transport. The method 100 comprises two procedures 110, 120 which may be performed independently of each other or in synchronization. Procedure 110 is performed repeatedly and at a fixed or variable time interval to determine the current position of the tracker 11 in the global coordinate system 29. Procedure 120 is performed repeatedly and at a fixed or variable time interval to wirelessly transmit position data and/or other data to the remote computer. As shown, the positions 130 that are determined by procedure 110 are used by the procedure 120. Depending on the timing between the procedures 110, 120, one or more positions may be included in the position data that is transmitted by procedure 120.

FIG. 3A is a schematic block diagram of a tracker 11. The tracker 11 is a unitary device that comprises a control unit 30, which defines logic configured to control the operation of the tracker 11. The control unit 30 comprises a processor 31A and computer memory 31B. In some embodiments, a control program is stored in the memory 31B and executed by the processor 31A to operate the control unit 30. The control program may be supplied to the tracker 11 on a computer-readable medium, which may be a tangible (non-transitory) product (for example, magnetic medium, optical disk, read-only memory, flash memory, etc.) or a propagating signal. The processor 31A may, for example, include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array").

The tracker 11 further comprises a positioning system 32, a communication system 33 and a measurement system 34, which are connected for data communication with the control unit 30. A power source 39 is included to power the components of the tracker 11. The power source 39 may include one or more batteries, fuel cells, etc.

The positioning system 32 is configured to determine the geographic position of the tracker 11 in the global coordinate system 29 based on one or more incoming wireless positioning signals received by a receiver 32'. The positioning system 32 may be configured to operate with any available GNSS (Global Navigation Satellite System), including but not limited to GPS, GLONASS, Galileo, Beidou, etc. Thus, receiver 32' may be a GNSS receiver 32' for receiving wireless signals from a satellite system, and the positioning system 32 may be configured to perform autonomous geo-spatial positioning in the coordinate system 29 based on the wireless signals.

The communication system 33 is at least configured for cellular communication in the licensed and/or unlicensed frequency spectrum. The communication system 33 may be configured to implement one or more commercially available radio access technologies, such as circuit-switched network technologies, including but not limited to global system for mobile communications (GSM), code division multiple access (CDMA), wideband CDMA (WCDMA), and advanced or alternative versions of these standards, or packet-switched network technologies, including but not limited to general packet radio service (GPRS), universal mobile telecommunications system (UMTS), 3G, 4G, 4G long-term evolution (LTE), and 5G NR, and advanced or alternative versions of these standards. Alternatively or additionally, the communication system 33 may be configured to implement radio access technologies in the unlicensed frequency spectrum, such as MulteFire, LoRa, Sigfox, etc.

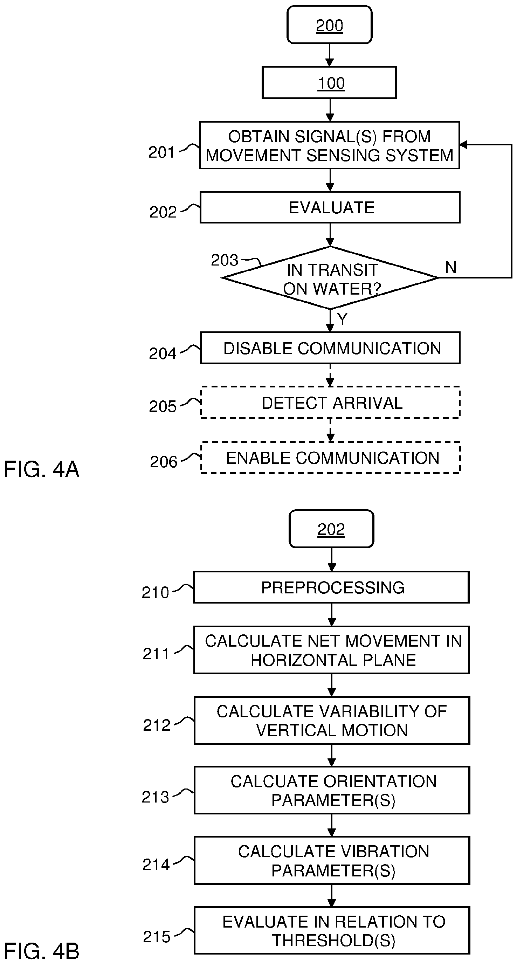

The measurement system 34 is a self-contained system which is configured to sense movements of the tracker 11 and may be referred to as a "movement sensing system". The term "self-contained" implies that the system 34 senses movement independently of external signals. The system 34 may thus measure physical parameters of the tracker 11 itself, such as acceleration, speed, displacement, altitude, pressure, vibration, orientation, etc. In the illustrated embodiment, the measurement system 34 comprises a plurality of sensors, including an accelerometer 35, a gyroscope 36, a vibration sensor 37, and a magnetometer 38. The accelerometer 35 is configured to measure acceleration along one or more axes. The gyroscope 36 is configured to measure orientation and/or angular speed. The vibration sensor 37 is configured to measure the magnitude of vibrations at one or more frequencies. The magnetometer 38 is configured to measure the strength and direction of the magnetic field. In some embodiments, to be described with reference to FIG. 4B, the measurement system 34 comprises at least one of the accelerometer 35, the gyroscope 36, or the vibration sensor 37. It should be understood that the sensors 35-38 may be separate units or integrated into one or more modules. For example, the measurement system 34 may include an inertial measurement unit (IMU) that contains the accelerometer 35, the gyroscope 36 and, optionally, the magnetometer 38. The measurement system 34 may include additional sensors, such as a pressure sensor, an altimeter, etc.

FIG. 3B is a functional block diagram of a system comprising the tracker 11 and a remote computer 40. The tracker 11 is configured to wirelessly transmit position data, [POS], to the remote computer 40, which may be configured to respond by wirelessly transmitting an acknowledgement signal, ACK. In some embodiments, described further below, the remote computer 40 may transmit further data in response to the position data, for example, this further data may be used by the tracker 11 to detect arrival at port 2. In some embodiments, the tracker 11 may be configured to transmit other information to the remote computer 40, in addition to or instead of the position data. Such additional information may, for example, be indicative of transport-related events detected by the tracker 11.

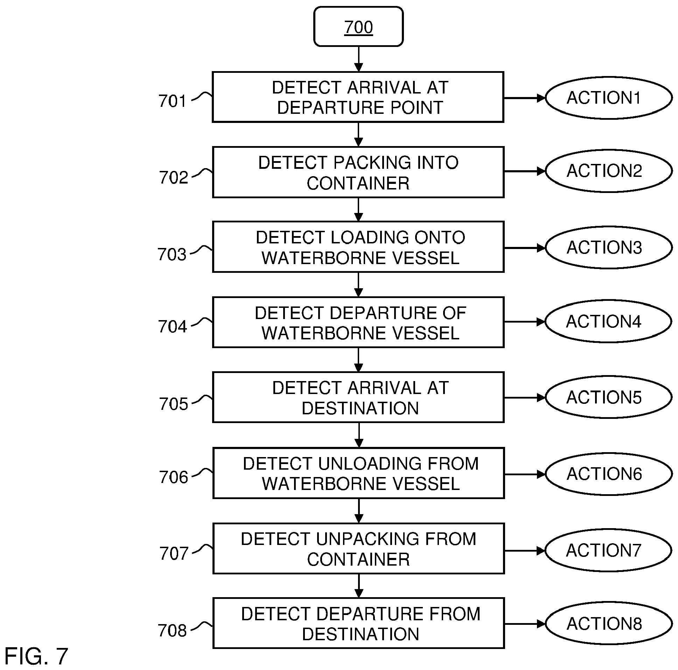

Reverting to FIG. 1A, examples of transport-related events are indicated as DE1-DE4 and AE1-AE2. One or more of these events may be detected by the tracker 11 and may cause the tracker 11 to take specific action. DE1-DE4 are departure events. DE1 corresponds to the tracker 11 arriving at port 1. DE2 corresponds to the tracker 11 being packed into a container 23. DE3 corresponds to the tracker 11 being loaded onto the vessel 22. DE4 corresponds to the tracker 11 having departed from port 1 and being in transit on the vessel 22. AE1-AE2 are arrival events. AE1 corresponds to the tracker 11 arriving at the second port 2 and no longer being in transit. AE2 corresponds to the tracker 11 being unpacked from the container 23. Although not shown, further arrival events may correspond to the tracker 11 being unloaded from the vessel 22, or the tracker 11 being in transit on road transport. Further details about the transport-related events and associated actions taken by the tracker 11 will be described further below with reference to FIG. 7.

FIG. 4A is a flow chart of an example method 200 performed by a tracker 11 in accordance with some embodiments. The method 200 combines the method 100 in FIG. 2 with a procedure for detecting when the tracker is in transit on water. Thus, in the method 200, the tracker 11 may perform the procedures 110, 120 as described above, for example in accordance with a default timing scheme. FIG. 1B is a timing diagram of actions taken by the tracker 11 along the transportation route in FIG. 1A. In FIG. 1B, individual executions of the position determination 110 are represented by open circles and designated PD, and individual executions of the data transmission 120 are represented by vertical arrows and designated DT. In this example, the tracker 11 performs the procedures 110, 120 in synchronization, by determining a current position and then transmitting the current position to the remote computer. During road transport, the tracker 11 performs procedures 110, 120 at a default time interval Δ1. In a non-limiting example, Δ1 is in the range from 10 minutes to 2 hours.

Reverting to FIG. 4A, the method 200 comprises a step 201 of obtaining one or more signals from the measurement system 34. The signal(s) may represent raw data generated by one or more of the sensors 35-39 in the system 34 and/or refined data that is generated by the system 34 based on the raw data from one or more of the sensors 35-39. Step 202 evaluates the signal(s) to detect if the tracker 11 is in transit on water. In other words, step 202 has the purpose of detecting that the signal(s) is (are) consistent with a dedicated movement of a waterborne vessel. In some embodiments, step 202 involves a first detection that the tracker 11 is located on water, and a second detection that the tracker 11 is moving in a horizontal plane. In other embodiments, step 202 involves a combined detection that the tracker 11 is located on or in a waterborne vessel in transit. The method 200 presumes that the tracker 11 is first loaded onto a waterborne vessel that is anchored at a port and thus not in transit. In the following, this is referred to as a "rest state" of the vessel. The detection of step 202 may involve detecting that the waterborne vessel starts to move away from the port. If step 202 fails to detect that the tracker 11 is in transit on water, step 203 returns the method to step 201, optionally after a waiting time. The method 200 may repeat steps 201-203 at any suitable time interval. In a non-limiting example, the time interval is in the range of 1-60 minutes. It should be understood that the method 100 is performed in parallel with steps 201-203, for example in accordance with the default timing scheme. If step 202 detects that the tracker 11 is in transit on water, step 203 directs the method to step 204. In step 204, the tracker 11 disables the wireless communication by the communication system 33. In this context, "disable communication" implies that the communication system 33 is prevented from transmitting data. For example, the communication system 33 may be shut down or set in a low-power state. Step 204 thereby results in a discontinuation of the data transmission 120 by the method 100. The position determination 110 may or may not be altered or disabled by step 204. If the position determination 110 is not disabled, the positions may be stored in internal memory 31B of the tracker 11 while the data transmission is disabled. As indicated by dashed lines in FIG. 4A, the method 200 may further comprise a step 205 of detecting arrival at the destination of the waterborne transport, for example port 2 in FIG. 1A. Step 205 may be performed by analogy with steps 201-203, but with step 202 processing signal(s) from the system 34 to detect that the tracker 11 is no longer in transit. Further variants of step 205 are described below with reference to FIGS 7-8. When arrival is detected in step 206, the wireless communication may be enabled, so that the communication system 33 again is operable to perform the data transmission 120. Depending on implementation, the position determination 110 may also be enabled in step 206, if previously disabled. Following step 206, the tracker 11 may thus resume the method 100, in accordance with the default timing scheme or another timing scheme.

Reverting to FIG. 1B, the repeated execution of steps 201-203 is represented as a movement monitoring process, MM. In the illustrated example, MM is started when the tracker 11 detects that it is in proximity to the first port 1, which corresponds to event DE1. By the MM, the tracker 11 detects when it is in transit on water, which corresponds to event DE4. As shown, the tracker 11 discontinues the data transmission DT when DE4 is detected, or shortly thereafter. In the illustrated example, the tracker 11 also stops MM when DE4 is detected. In a variant, MM is performed by the tracker 11 also after DE4, possibly at an increased time interval, to detect arrival at the destination (cf. step 205). In a further variant, MM is performed by the tracker 11 at all times during the transportation route, be it on land, water or air.

Significant power savings in the tracker 11 are enabled by the provision of the movement monitoring process, MM. The operation of communication system 33 to probe for a wireless connection consumes significantly more power than the generation of the signal(s) by the measurement system 34 and the processing of the signal(s) for detection of DE4, even if MM is performed at a time interval that is a fraction of the time interval between DTs, and if MM is performed also during the waterborne transport. For example, the power consumption of an active cellular transceiver may be at least 1,000 times larger than the power consumption of an active IMU.

FIG. 4B is a flow chart of an example procedure that may be performed as part of step 202 in FIG. 4A. In the illustrated example, different parameters are calculated in steps 211-214 and jointly evaluated in step 215 for detection of DE4. However, it is conceivable that only a subset of steps 211-214, or even one of steps 211-214, is performed to generate input data for the evaluation in step 215.

As indicated by step 210, the procedure may comprise a preprocessing of the signal(s) from the measurement system 34, for example for noise reduction. For example, a low-pass (LP) filter may be operated in step 210 on one or more signals from the accelerometer 34 or the gyroscope 35 to suppress signal components caused by high-frequency motion, for example from motor vibrations or abrupt impacts of waves onto the vessel. One reason for LP filtering is that slow changes in signals(s) from the accelerometer 34 and/or the gyroscope 35 are currently believed to be more relevant for detection of DE4 than fast changes.

In step 211, one or more signals from the accelerometer 35 are processed for calculation of a motion parameter that represents the net movement of the tracker in a horizontal plane within a measurement time period. As used herein, "net movement" refers to an aggregation of movement data determined at a plurality of time points in the measurement time period. The movement data at each time point may be a vector that represents an acceleration, a speed, or a displacement (distance) in the horizontal plane. The aggregation may be a summation of the vectors for the plurality of time points. Thus, the net movement may represent a net acceleration, a net speed, or a net displacement during the measurement time period. It is conceivable that more than one motion parameter is calculated in step 211, for example net movement in terms of two or more of acceleration, speed and displacement. One reason for using more than motion parameter is to reduce the impact of noise and/or integration error. The impact of noise is lower in calculated speed compared to calculated acceleration, and even lower in calculated displacement. The impact of integration error, on the other hand, is absent in calculated acceleration and is higher in calculated displacement compared to calculated speed.

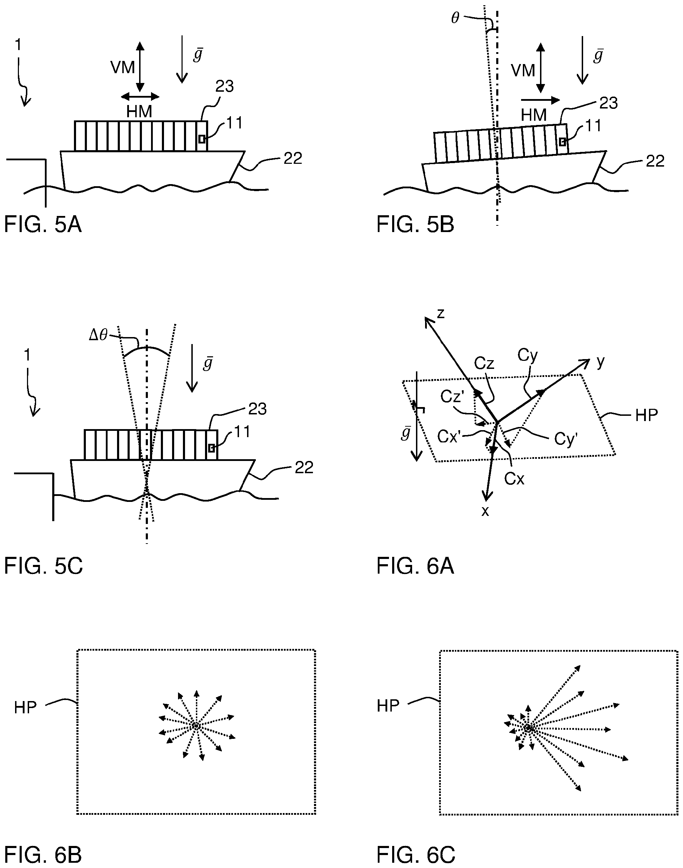

To explain the rationale of step 211, reference is made to FIGS 5A-5B which illustrate a vessel 22 before and after departure from port 1, respectively. The tracker 11 is located within a container 23 on the vessel 22. In FIG. 5A, the vessel 22 is in the rest state and follows the movement of the waves, resulting in vertical movement (VM) parallel to the direction of gravity, *g̅*, and a horizontal movement (HM) in a plane perpendicular to the direction of gravity. While instantaneous measurements of VM and HM are likely to be non-zero, the net movement will be close to zero for both VM and HM over several instantaneous measurements. In FIG. 5B, the vessel 22 moves away from port 1. The net movement of VM ("net VM") will still be close to zero, whereas the net movement of HM ("net HM") in terms of acceleration will differ significantly from zero as the vessel 22 accelerates to its cruise speed. Further, the net HM in terms of displacement or speed will differ significantly from zero while the vessel 22 is in transit. The calculation in step 211 effectively differentiates between "background " movement, caused by waves, and actual forward movement of a waterborne vessel under propulsion.

Step 215 may comprise determining if the net HM differs significantly from zero, for example by comparing one or more parameter values representing net HM to a respective threshold value (movement threshold). The threshold value may be fixed or set based on previous values of the net HM. Detection of DE4 may be implied if the net HM exceeds the threshold value. In some embodiments, the threshold value may be set to differ from zero by a margin to limit false positives. Alternatively or additionally, step 215 may evaluate the distribution of resultant HP vectors (below) in relation to one or more reference distributions.

The calculation of the net HM by use of the accelerometer 34 is further exemplified in FIGS 6A-6C. The illustrated example presumes that the accelerometer 34 is configured to measure acceleration components in three mutually orthogonal directions, represented by coordinate axes x, y, z in FIG. 6A. The orientation of the tracker 11, and thus of the accelerometer 34, in relation to the direction of gravity, *g̅*, is not known a priori. However, as is well-known to the skilled person, the orientation of x, y, z relative to *g̅* may be calculated based on the measured acceleration components. FIG. 6A also shows a horizontal plane HP, which is perpendicular to *g̅*. When *g̅* has been determined, the location of HP in relation to x, y, z is also known. Given this information, acceleration components Cx, Cy, Cz measured for the respective axis x, y, z at a time instance are projected onto HP, resulting in projected acceleration components Cx', Cy', Cz', which are vectors in HP. By calculating the vector sum of the projected acceleration components Cx', Cy', Cz', a resultant HP acceleration vector is determined for the time instance. The calculation in step 211 generates a plurality of resultant HP acceleration vectors during the measurement time period. FIG. 6B schematically illustrates a plurality of resultant HP acceleration vectors when the vessel 22 in the rest state. As understood, the net HM may be calculated as a vector sum of the resultant HP acceleration vectors and will be close to zero. FIG. 6C schematically illustrates a plurality of resultant HP acceleration vectors when the vessel 22 is accelerating away from the first port 1. Clearly, the net HM is significantly different from zero. The skilled person realizes that it is equally possible to calculate, based on the acceleration components Cx, Cy, Cz, a resultant HP vector representing speed or displacement and determine the net HM in terms of speed or displacement.

In some embodiments, step 211 further comprises processing one or more signals from the magnetometer 38 to determine a direction of the net HM in the global coordinate system 29, for example in relation to cardinal directions. If the tracker 11 stores geographic data about port 1, for example a map, step 215 may evaluate the direction of the net HM in relation to the geographic data. For example, step 215 may check if the direction at least approximately matches an expected direction of departure for the vessel 22 from port 1. If no match is found, step 215 may decide not to indicate DE4 even if the net HM is large.

In step 212, one or more signals from the accelerometer 35 are processed for calculation of one or more motion parameters that represent the variability in VM ("VM variability") within a measurement time period, which may or may not be the same as the measurement time period used by step 211. The VM variability may be used by step 215 to detect if the tracker 11 is located on water, for example by comparing a parameter value representing VM variability to a threshold value (variability threshold). The threshold value may be fixed or set based on previous values of the VM variability. For example, the VM variability may be used to detect when the tracker 11 has been loaded onto the vessel 22. The VM variability may also be used by step 215 to detect DE4, for example by detecting a characteristic change in the VM variability when the vessel 22 starts to move away from port 1. For example, the VM variability may decrease as the vessel 22 cuts through waves as a result of its movement away from port 1. Alternatively or additionally, step 215 may evaluate the distribution of resultant VM vectors (below) in relation to one or more reference distributions.

The calculation of VM movement by use of the accelerometer 34 may be understood from FIG. 6A. After determination of the direction of gravity, *g̅*, the components Cx, Cy, Cz that are measured at a time instance may be projected onto *g̅*, resulting in vertically projected components. By calculating the vector sum of the vertically projected components, a resultant VM vector is determined for the time instance. The calculation in step 212 generates a plurality of resultant VM vectors during the measurement time period. The VM variability may be calculated based on the resultant VM vectors, by use of any conventional variability measure, such as variance, standard deviation, difference between maximum and minimum magnitudes, etc.

In step 213, one or more signals from the gyroscope 36 are processed for calculation of one or more orientation parameters that represent the orientation of the tracker 11 relative to the direction of gravity, *g̅*. For example, step 213 may determine the orientation at a plurality of time points in a measurement time period, which may or may not be the same as the first measurement time period used by step 211. In some embodiments, step 213 calculates an orientation parameter that represents the average orientation of the tracker within the measurement time period, and step 215 evaluates the average orientation. As shown in FIG. 5B, when the vessel 22 is propelled to cut though waves, the average orientation of the vessel 22, and thus the tracker 11, may increase by an angle *θ* compared to when the vessel 22 is in the rest state at the first port 1 (FIG. 5A). Thus, step 215 may detect DE4 by comparing the average orientation to a threshold value, which may be fixed or set based on previous average orientations. In some embodiments, step 213 calculates an orientation parameter that represents the variability in orientation ("angular variability") within the time period, and step 215 evaluates the angular variability for changes representative of a waterborne vessel in transit. The angular variability may be calculated based on the measured orientations, by use of any conventional variability measure. In FIG. 5C, the variability is indicated by Δθ. The angular variability may be used by step 215 to detect if the tracker 11 is located on water, for example by comparing Δθ to a threshold value. The threshold value may be fixed or set based on previous values of Δθ. The angular variability may also be used by step 215 to detect DE4, for example by detecting a characteristic change in Δθ when the vessel 22 starts to move away from the first port 1. Alternatively or additionally, step 215 may evaluate the distribution of orientations that are calculated by step 213 for the plurality of time points in relation to one or more reference distributions.

In step 214, one or more signals from the vibration sensor 37 are processed for calculation of one or more vibration parameters that represent vibrational movement of the tracker 11. For example, the vibration parameters(s) may represent the magnitude of vibrations at one or more frequencies. The vibration parameters(s) may be calculated to be characteristic of or specific to a waterborne vessel in transit, for example vibrations induced by the propulsion of the vessel 22 (engines and/or propellers) when the vessel 22 is accelerated to cruise speed and/or when the vessel 22 travels at cruise speed. Step 215 evaluates the vibration parameter(s) in relation to reference values or threshold values to detect DE4. For example, step 215 may comprise a pattern matching between a frequency pattern of the measured vibrations in relation to one or more reference patterns.

Generally, irrespective of the parameter values determined by steps 211-214, step 215 may be implemented in many different ways. In some embodiments, the evaluation is rule based. For example, step 215 may detect that the tracker is in transit on water (event DE4) when a predefined minimum number of rules are fulfilled. Each such rule may correspond to an evaluation of one or more parameter values determined by steps 211-214, or any subset thereof. In some embodiments, the evaluation comprises operating a machine-learning based model on a plurality of parameter values determined by steps 211-214 or a subset thereof. Such a model may be trained to recognize DE4 based on the plurality of parameter values.

FIG. 7 is a flow chart of an example method 700 that may be performed by a tracker 11. The steps of the method 700 are designed to detect events that may occur in connection with waterborne transport. In the following example, the method 700 performs steps 701-708 in sequence. However, it is conceivable that the method 700 concurrently evaluates more than one step for fulfillment and skips one or more intermediate steps if a step is found to be fulfilled. It may also be noted that the method 700 need not include all of the detection steps 701-708. The method 700 will be described with reference to the route view in FIG. 1A and the timing diagram in FIG. 1B.

In step 701, the tracker 1 operates to detect arrival at a departure point, for example port 1 in FIG. 1A. As shown in FIG. 1B and described above, the tracker 1 is configured to repeatedly determine its current position by use of the positioning system 32 at a time interval Δ1. For example, step 701 may comprise comparing the current position to one or more geofences, which are stored in the tracker 11 to represent different departure points. In FIG. 1A, a geofence 23 is indicated by dashed lines and is defined by a radius R from a reference point given by coordinates in the global coordinate system 29. Other geofence definitions are conceivable. If the current position is within the geofence 23, arrival is detected. The arrival detection may trigger the tracker 11 to perform one or more actions ("Action 1 "), for example operate the communication system 33 to transmit position data and/or an indication of arrival, change the time interval of position determination (PD) and/or data transmission (DT), or start the movement monitoring process (MM). In the example of FIG. 1B, the arrival occurs at DE1 and is detected the next time the tracker 11 performs PD. Upon such detection, the tracker 11 changes (decreases) the time interval of PD and DT to Δ2 and starts the MM.

In step 702, the tracker 11 operates to detect packaging into a container 23 at port 1. For example, step 702 may comprise detecting that the positioning system 32 is unable to receive a GNSS signal, which may be blocked by the container 23. If packaging is detected in step 702, the tracker 11 may be triggered to perform one or more actions ("Action2"), for example operate the communication system 33 to transmit an indication of the packaging, change the time interval of data transmission DT, or disable the position determination. In the example of FIG. 1B, the packaging occurs at DE2 and is detected the next time the tracker 11 performs PD. Upon such detection, the tracker 11 disables position determination.

In step 703, the tracker 11 operates to detect loading onto a waterborne vessel at port 1. For example, step 703 may comprise detecting, based on the MM, that the VM variability and/or the angular variability is representative of a vessel that is located on water. If loading is detected in step 703, the tracker 11 may be triggered to perform one or more actions ("Action3"), for example operate the communication system 33 to transmit an indication of the loading, change the time interval of data transmission DT, or disable the position determination. In the example of FIG. 1B, the loading occurs at DE3 and is detected approximately at the same time. In FIG. 1B, the tracker 11 takes no action at this time.

In step 704, the tracker 11 operates to detect departure of the waterborne vessel from port 1. Step 704 is performed based on the MM and may be implemented in accordance with any of the examples described with reference to FIGS 4A-4B. If departure is detected in step 704, the tracker 11 is triggered to perform one or more actions ("Action4"). As understood from the foregoing, one such action is to disable the communication system 33. Examples of other actions include operating the communication system 33 (before being disabled) to transmit an indication of the departure, operating the tracker 11 to obtain an estimated time-of-arrival (ETA) for the waterborne transport on the vessel 22, or stopping the MM. In the example of FIG. 1B, the departure occurs at DE4 and is detected approximately at the same time, and the tracker 11 performs all of the foregoing actions.

In some embodiments, step 704 may comprise a verification that the vessel indeed is in transit. For such verification, the tracker 11 may enable and operate the communication system 33 at a selected time point after departure detection. If the communication system 33 is able to establish communication at the selected time point, the departure detection may have been made in error and the tracker 10 may restart step 704, and optionally use a larger or different set of parameter values in step 202 (FIGS 4A-4B).

The one or more ETAs may be used by step 705 to detect arrival. The tracker 11 may obtain the ETA based on transport-related data (TRD) received from the remote computer 40, for example in response to a data transmission (DT) that is performed upon departure detection. In FIG. 4, the remote computer 40 may include the TRD in the acknowledgement signal ACK. The remote computer 40 may determine the TRD based on the position data that have been previously transmitted by the tracker 11, for example at arrival detection (step 701). For example, the remote computer may identify port 1 based on the position data, identify one or more candidate vessels that are scheduled to depart from port 1 near the time point of DE4, determine one or more ETAs for the candidate vessel(s), and include the ETA(s) in the TRD. If the remote computer 40 knows the final destination of the tracker 11, this information may be used by the remote computer to limit the selection of candidate vessels. In some embodiments, TRD includes a departure schedule of vessels from the first port 1, and the tracker 11 is configured to process the departure schedule to determine one or more ETAs, for example by identifying one or more vessels with a scheduled departure time that approximately matches the time point when the tracker 11 detected its departure (DE4).

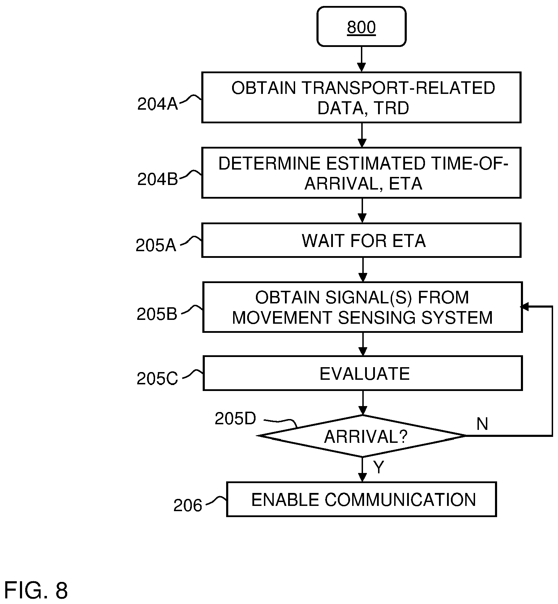

In step 705, which corresponds to step 205 in FIG. 4A, the tracker 11 operates to detect that the waterborne transport is completed, for example by the vessel 22 arriving and attaining the rest state at port 2. FIG. 8 is a flow chart of an example procedure 800 for the arrival detection by the tracker 11. The procedure 800 comprises preparatory steps 204A and 204B, in which the tracker obtains the TRD and determines the ETA, for example as described above. The ETA corresponds to an estimated duration of the waterborne transport of the tracker 11 to port 2. In step 205A, the tracker 11 waits for the ETA. At the ETA, the procedure 800 starts to repeatedly perform steps 205B-205D, which correspond to steps 201-203 in FIG. 4A. In other words, the procedure 800 starts the monitoring process MM. However, the evaluation step 205C differs from the evaluation step 202 and is arranged to detect when the calculated parameter values are consistent with a waterborne vessel in a rest state. Given this modification, step 205C may calculate and evaluate any of the parameter values described with reference to FIG. 4B. If arrival is detected, the procedure 800 proceeds to step 206, in which the tracker 11 enables the communication system 33, which was disabled at step 704 and kept disabled until the ETA. In a variant, step 206 may be performed directly after step 205A. If step 204B has identified more than one ETA, steps 205B-205D may be initiated at each of the ETAs and discontinued after a given time period if no arrival is detected.

In a variant, the procedure 800 may be supplemented or replaced by position-based arrival detection, in which the tracker 11 repeatedly determines its current position and compares it to the plurality of geofences, by analogy with step 701, to determine if the tracker 11 is located within range of a port. The tracker 11 may start the position determination at the ETA to save power. If the positioning system 32 of the tracker 11 is capable of receiving GNSS signals during the waterborne transport, for example if the tracker 11 has not been packed into a container 23, arrival may be detected as soon as the vessel 22 arrives at port 2. On the other hand, if the tracker 11 is unable to perform position determination until it is unloaded from the container 23, the tracker 11 may not detect arrival until some time after it has been unloaded, for example at AE2 in FIG. 2.

As shown in FIG. 7, the tracker 11 may be triggered to perform one or more actions ("Action5") upon arrival detection. As described for FIG. 8, such actions may include enabling the communication system 33. Examples of other actions include operating the communication system 33 to transmit position data and/or an indication of arrival, starting the position determination, or stopping the MM. In the example of FIG. 1B, arrival occurs at AE1 and is detected approximately at the same time. Upon such detection, the tracker 11 enables the communication system 35 and performs a data transmission (DT).

In step 706, the tracker 11 operates to detect unloading from the waterborne vessel at port 2. Step 706 may be performed by analogy with step 703. If unloading is detected in step 706, the tracker 11 may be triggered to perform one or more actions ("Action6"), for example operate the communication system 33 to transmit position data and/or an indication of unloading, start the position determination, change the time interval of data transmission and/or position determination, or stop the MM.

In step 707, the tracker 11 operates to detect unpacking from the container 23 at port 2. Step 707 may be performed by analogy with step 702. If unpacking is detected in step 707, the tracker 11 may be triggered to perform one or more actions ("Action7"), for example operate the communication system 33 to transmit position data and/or an indication of unpacking, start the position determination, or change the time interval of data transmission and/or position determination, or stop the MM. In the example of FIG. 1B, unpacking occurs at AE2 and is detected approximately at the same time. Upon such detection, the tracker 11 enables the communication system 35 and performs a data transmission (DT).

In step 708, the tracker 11 operates to detect departure from port 2. Step 708 may be performed by analogy with step 701. If departure is detected in step 708, the tracker 11 may be triggered to perform one or more actions ("Action8"), for example operate the communication system 33 to transmit position data and/or an indication of departure, or change the time interval of data transmission and/or position determination, or stop the MM.

While the subject of the present disclosure has been described in connection with what is presently considered to be the most practical embodiments, it is to be understood that the subject of the present disclosure is not to be limited to the disclosed embodiments, but on the contrary, is intended to cover various modifications and equivalent arrangements included within the spirit and the scope of the appended claims.

Further, while operations are depicted in the drawings in a particular order, this should not be understood as requiring that such operations be performed in the particular order shown or in sequential order, or that all illustrated operations be performed, to achieve desirable results.

In the following, clauses are recited to summarize some aspects and embodiments as disclosed in the foregoing.

Clause 1. A tracker device comprising a positioning system (32), a communication system (33), and a movement sensing system (34), the tracker device being configured to: intermittently operate the positioning system (32) to determine a geographic position of the tracker device; intermittently operate the communication system (33) to transmit the geographic position of the tracker device to a remote computer (40); detect, based on at least one signal from the movement sensing system (34), that the tracker device is in transit on a waterborne vessel (22); and disable the communication system (33) when the tracker device is detected to be in transit on the waterborne vessel (22).

Clause 2. The tracker device of clause 1, wherein the movement sensing system (34) comprises at least one of an accelerometer (35), a gyroscope (36), or a vibration sensor (37).

Clause 3. The tracker device of clause 1 or 2, which is configured to detect that the tracker device is in transit by calculating and evaluating a first motion parameter that represents net movement in a horizontal plane (HP), which is perpendicular to a direction of gravity.

Clause 4. The tracker device of clause 3, wherein the first motion parameter indicates that the tracker device is in transit when the net movement in the horizontal plane (HP) exceeds a movement threshold which is different from zero.

Clause 5. The tracker device of clause 3 or 4, which is configured to obtain, based on the at least one signal from the movement sensing system (34), components (Cx, Cy, Cz) of acceleration, speed or displacement in three mutually perpendicular directions (x, y, z), and wherein the first motion parameter is given by an aggregation of said components (Cx, Cy, Cz) as projected onto the horizontal plane (HP) at a plurality of time points in a first time period.

Clause 6. The tracker device of clause 5, wherein the aggregation of said components (Cx, Cy, Cz) as projected onto the horizontal plane (HP) comprises a vector sum of a plurality of two-dimensional vectors (Cx', Cy', Cz') representing acceleration, speed or displacement.

Clause 7. The tracker device of any preceding clause, which is configured to detect that the tracker device is on the waterborne vessel (22) by calculating and evaluating a second motion parameter that represents a variability of movement along a direction of gravity.

Clause 8. The tracker device of clause 7, wherein the second motion parameter indicates that the tracker device is on the waterborne vessel (22) when the variability of movement exceeds a variability threshold.

Clause 9. The tracker device of clause 5, which is configured to detect that the tracker device is on the waterborne vessel (22) by calculating and evaluating a second motion parameter that represents a variability of movement along a direction of gravity, wherein the second motion parameter is given by said components (Cx, Cy, Cz) as projected onto the direction of gravity over a second time period.

Clause 10. The tracker device of any preceding clause, which is configured to detect that the tracker device is in transit by calculating and evaluating at least one orientation parameter that represents an orientation of the tracker device in relation to a direction of gravity.

Clause 11. The tracker device of clause 10, wherein the at least one orientation parameter represents an average orientation or a variability of orientation over a time period.

Clause 12. The tracker device of clause 11, wherein the at least one orientation parameter indicates that the tracker device is in transit on the waterborne vessel (22) when the average orientation exceeds an angular threshold or when a characteristic change is detected in the variability of orientation.

Clause 13. The tracker device of any preceding clause, which is configured to detect that the tracker device is in transit on the waterborne vessel (22) by calculating and evaluating a vibration parameter that represents a magnitude of vibrations at one or more frequencies.

Clause 14. The tracker device of clause 13, wherein the vibration parameter indicates that the tracker device is in transit on the waterborne vessel (22) when the magnitude of the vibrations at the one or more frequencies is specific to the waterborne vessel (22) in transit.

Clause 15. The tracker device of any preceding clause, which is further configured to, when the tracker device is detected to be in transit on the waterborne vessel (22) and before the communication system (33) is disabled, operate the communication system (33) to receive transport-related data that is indicative of the transit by the waterborne vessel (22).

Clause 16. The tracker device of clause 15, which is further configured to process the transport-related data to determine an estimated duration of the transit of the tracker device on the waterborne vessel (22) and to maintain the communication system (33) disabled for the estimated duration.

Clause 17. The tracker device of clause 16, which is further configured to, after the estimated duration, enable the communication system (33), optionally upon detecting, based on the at least one signal of the movement sensing system (34), that the transit of the tracker device on the waterborne vessel (22) is completed.

Clause 18. The tracker device of any preceding clause, which is further configured to detect, based on the geographic position, arrival at a departure point (21) for the transit of the tracker device on the waterborne vessel (22).

Clause 19. The tracker device of any preceding clause, which is further configured to detect packing of the tracker device into a shipping container (23) based on a disappearance of an incoming positioning signal at the positioning system (32).

Clause 20. The tracker device of any preceding clause, which is further configured to detect loading of the tracker device onto the waterborne vessel (22) based on the at least one signal of the movement sensing system (34).

Clause 21. A method performed by a tracker device comprising a positioning system (32), a communication system (33), and a movement sensing system (34), said method comprising: intermittently operating (110) the positioning system to determine a geographic position of the tracker device; intermittently operating (120) the communication system to transmit the geographic position of the tracker device to a remote computer; detecting (201-203), based on at least one signal from the movement sensing system (34), that the tracker device is in transit on a waterborne vessel; and disabling (204) the communication system when the tracker device is detected to be in transit on the waterborne vessel.

Clause 22. A computer-readable medium comprising instructions which, when installed on a processing system (30), causes the processing system (30) to perform the method of clause 21.

## Claims

1. A tracker device comprising a positioning system (32), a communication system (33), and a movement sensing system (34), the tracker device being configured to:
intermittently operate the positioning system (32) to determine a geographic position of the tracker device,
intermittently operate the communication system (33) to transmit the geographic position of the tracker device to a remote computer (40),
detect, based on at least one signal from the movement sensing system (34), that the tracker device is in transit on a waterborne vessel (22), and
disable the communication system (33) when the tracker device is detected to be in transit on the waterborne vessel (22).

2. The tracker device of claim 1, wherein the movement sensing system (34) comprises at least one of an accelerometer (35), a gyroscope (36), or a vibration sensor (37).

3. The tracker device of claim 1 or 2, which is configured to detect that the tracker device is in transit by calculating and evaluating a first motion parameter that represents net movement in a horizontal plane (HP), which is perpendicular to a direction of gravity.

4. The tracker device of claim 3, wherein the first motion parameter indicates that the tracker device is in transit when the net movement in the horizontal plane (HP) exceeds a movement threshold which is different from zero.

5. The tracker device of claim 3 or 4, which is configured to obtain, based on the at least one signal from the movement sensing system (34), components (Cx, Cy, Cz) of acceleration, speed or displacement in three mutually perpendicular directions (x, y, z), and wherein the first motion parameter is given by an aggregation of said components (Cx, Cy, Cz) as projected onto the horizontal plane (HP) at a plurality of time points in a first time period.

6. The tracker device of any preceding claim, which is configured to detect that the tracker device is on the waterborne vessel (22) by calculating and evaluating a second motion parameter that represents a variability of movement along a direction of gravity.

7. The tracker device of claim 6, wherein the second motion parameter indicates that the tracker device is on the waterborne vessel (22) when the variability of movement exceeds a variability threshold.

8. The tracker device of any preceding claim, which is configured to detect that the tracker device is in transit by calculating and evaluating at least one orientation parameter that represents an orientation of the tracker device in relation to a direction of gravity.

9. The tracker device of claim 8, wherein the at least one orientation parameter represents an average orientation or a variability of orientation over a time period, and wherein the at least one orientation parameter indicates that the tracker device is in transit on the waterborne vessel (22) when the average orientation exceeds an angular threshold or when a characteristic change is detected in the variability of orientation.

10. The tracker device of any preceding claim, which is configured to detect that the tracker device is in transit on the waterborne vessel (22) by calculating and evaluating a vibration parameter that represents a magnitude of vibrations at one or more frequencies.

11. The tracker device of any preceding claim, which is further configured to, when the tracker device is detected to be in transit on the waterborne vessel (22) and before the communication system (33) is disabled, operate the communication system (33) to receive transport-related data that is indicative of the transit by the waterborne vessel (22), process the transport-related data to determine an estimated duration of the transit of the tracker device on the waterborne vessel (22), and maintain the communication system (33) disabled for the estimated duration, wherein the tracker device is further configured to, after the estimated duration, enable the communication system (33), optionally upon detecting, based on the at least one signal of the movement sensing system (34), that the transit of the tracker device on the waterborne vessel (22) is completed.

12. The tracker device of any preceding claim, which is further configured to detect, based on the geographic position, arrival at a departure point (21) for the transit of the tracker device on the waterborne vessel (22).

13. The tracker device of any preceding claim, which is further configured to detect packing of the tracker device into a shipping container (23) based on a disappearance of an incoming positioning signal at the positioning system (32).

14. The tracker device of any preceding claim, which is further configured to detect loading of the tracker device onto the waterborne vessel (22) based on the at least one signal of the movement sensing system (34).

15. A method performed by a tracker device comprising a positioning system (32), a communication system (33), and a movement sensing system (34), said method comprising: intermittently operating (110) the positioning system to determine a geographic position of the tracker device; intermittently operating (120) the communication system to transmit the geographic position of the tracker device to a remote computer; detecting (201-203), based on at least one signal from the movement sensing system (34), that the tracker device is in transit on a waterborne vessel; and disabling (204) the communication system when the tracker device is detected to be in transit on the waterborne vessel.
